# EUROPEAN PATENT SPECIFICATION

(11) **EP 2 067 653 B1**
(45) Date of publication and mention of the grant of the patent: **02.05.2012**
(21) Application number: 07023750.8
(22) Date of filing: 07.12.2007
(51) Int. Cl.: B60N 2/08, F16B 7/04

(54) **Actuator assembly**
Aktuatoranordnung
Ensemble actionneur

(43) Date of publication of application: 10.06.2009
(73) Proprietor: L&P Swiss Holding Company, 9303 Wittenbach (CH)
(72) Inventor: Samain, Maxime, 8870 Emelgem (BE); Vanparys, Maarten, 8760 Meulebeke (BE)
(74) Representative: Banzer, Hans-Jörg

(56) References cited:
- EP-A2- 1 770 310
- DE-A1-102006 031 296
- FR-A1- 2 322 404
- US-A1- 2006 163 924

## Description

The present application relates to an actuator assembly, e.g. for use in a vehicle seat for actuating adjustment functions of the vehicle seat. In particular, the application relates to an actuator and to a handle to be connected to the actuator, thereby forming the actuator assembly.

For actuating adjustment functions of a vehicle seat, it is known to use manual actuators which are manually operated by a user via a handle, e.g. a hand-lever. Typically, the handle is assembled to the actuator by connecting the handle to a shaft of the actuator. By operating the handle, a rotational movement is transmitted to the actuator, which in turn transmits a force or a torque on an adjustment mechanism of the vehicle seat.

FR 2 322 404 A1 discloses an actuator according to the preamble of independent claim 1 and a handle according to the preamble of independent claim 8. A similar actuator assembly comprising an actuator and a handle for connecting to a shaft of the actuator is disclosed in EP 1 770 310 A2.

It is an object of the present invention to provide an actuator assembly which offers an improved connection between the actuator and the handle.

This object is achieved by an actuator according to claim 1 and by a handle according to claim 8. The dependent claims defined preferred and advantageous embodiments of the invention.

According to the invention, an actuator is provided which comprises a shaft to be received in a receiving hole of a handle when connecting the handle to the actuator. The shaft has a substantially uniform cross-sectional shape over at least the axial end portion to be received in the receiving hole. The cross-sectional shape of the shaft comprises a plurality of recesses formed in the outer periphery, thereby forming a plurality of axial channels in the outer surface of the shaft. A radial projection is formed at an axial position of at least one channel, the radial projection being configured to be engaged with a clip formed in the receiving hole of the handle.

According to this structure, the handle can be reliably connected to the actuator by inserting the shaft into the receiving hole of the handle so as to engage the clip with the radial projection. In addition to the actuator and the handle, there is no need for separate components to establish the connection. Further, the shaft is provided with a high stability as no reduced diameter sections have to be provided along the shaft.

Further, the present invention provides a handle which is adapted to be connected to the actuator according to the present invention. The handle comprises a receiving hole for receiving therein an end portion of the shaft. At least a portion of the receiving hole has a substantially uniform cross-sectional shape with a plurality of projections formed on the inner periphery, thereby forming a plurality of axial ribs on the inner surface of the receiving hole. A portion of at least one axial rib is formed as a clip for engaging the radial projection on the shaft. The handle may comprise a hand-lever portion or a hand-wheel portion to provide a comfortable grip for a user.

The term "substantially uniform cross-sectional shape" is intended to cover configurations of a shaft in which there are no significant or only local variations in the cross-sectional shape.

According to the invention, the cross-sectional shape of the shaft comprises a plurality of recesses formed in the outer periphery, thereby forming a plurality of axial channels in the outer surface of the shaft. In particular, the cross-sectional shape of the shaft may comprise four recesses in the outer periphery, resulting in four axial channels in the outer surface of the shaft. A radial projection is formed at an axial position of at least one of the channels, the radial projection being configured to be engaged with a clip in the receiving hole of the handle. Similarly, the cross-sectional shape of the receiving hole comprises a plurality of projections formed on the inner periphery, thereby forming a plurality of axial ribs on the inner surface of the receiving hole. In particular, the cross-sectional shape of the receiving hole may comprise four projections formed on the inner periphery. A portion of at least one of the ribs is formed as a clip for engaging the radial projection on the shaft.

According to this structure, by having a plurality of axial channels and a plurality of axial ribs, each axial rib may be engaged in a corresponding axial channel. In this way, the stability of the connection and the force transmission capability can be improved. Further, play of the handle with respect to the actuator may be reduced.

According to the invention, one of the channels has a different configuration as compared to the other channels. In particular, the radial projection of this channel may be formed with a reduced radial height, or the channel may be formed without the radial projection. Further, the cross-sectional shape of the channel may be different as compared to the other channels, i.e. the corresponding recess may be formed with a different shape as compared to the other recesses. For example, the recess may be provided with a different width or with a different depth. Similarly, one of the axial ribs in the receiving hole of the handle may be provided with a different configuration, so as to make with the differently configured axial channel on the shaft. In this way, an axial rib may be provided in the receiving hole which fits only into a single axial channel on the shaft. Accordingly, assembly of the handle to the shaft in a wrong angular orientation is excluded. This structure corresponds to a "poka yoke" type design of the actuator-handle connection.

The cross-sectional shape of the shaft, apart from the recesses , i.e. the outer peripheral configuration of the shaft, may be substantially circular, which offers a good stability and simple manufacture. Similarly, the cross-sectional shape of the receiving hole, apart from the projections, i.e. the inner peripheral configuration, may be substantially circular. However, other cross-sectional shapes are possible as well, e.g. polygonal, with or without rounded edges.

The receiving hole may be formed in a tubular receiving section of the handle, thereby minimizing the use of material. Further, in this way access to the clips in the receiving hole may be facilitated.

According to an embodiment, an opening in the tubular receiving section is formed around the clip. In particular, the opening may be asymmetric. In this way, the clip may be released by a suitable tool which is inserted into the opening so as to lift the clip. The clip may also comprise a lateral projection with extends within the opening and thereby facilitates releasing of the clip. Further, an external projection may be formed on the clip, the external projection extending outwardly from the tubular portion. In this way, the clip may be comfortably released even if the clip is located in a region which is difficult to access, e.g. within foam material or a trim of a vehicle seat. Further, the clip may be provided with a hole opened to the outside of the tubular portion for allowing the clip to be engaged with a suitable tool. The above possibilities for facilitating releasing of the clip may be combined with each other as suitable.

In addition, the present invention also provides an actuator assembly comprising an actuator as described above and a handle as described above. The actuator assembly may be used in a vehicle seat, e.g. for actuating adjustment functions of the vehicle seat. In particular, the actuator assembly may be used to adjust the position and/or degree of lumbar support.

In the following, the present invention will be described in more detail by referring to illustrative embodiments and to the accompanying drawings.
Fig. 1 is a schematic side view of a vehicle seat.
Fig. 2 is a schematic top view of the vehicle seat of Fig. 1.
Fig. 3 shows a perspective view of a shaft to be used in an actuator assembly according to an embodiment of the invention.
Fig. 4 shows a different perspective view of the shaft of Fig. 3.
Fig. 5 shows a perspective view of a handle to be used in a support assembly according to an embodiment of the invention.
Fig. 6 shows a front view of the handle of Fig. 5.
Fig. 7 schematically illustrates the handle of Figs. 5 and 6 as connected to the shaft of Figs. 3 and 4.
Fig. 8 illustrates the operation of a clip in the structure of Fig. 7.
Fig. 9 is a schematic axial cross-section of the actuator assembly as illustrated in Figs. 7 and 8.
Fig. 10 is a perspective view of an actuator assembly according to a further embodiment of the invention.
Fig. 11 is a perspective view of an actuator assembly according to a further embodiment of the invention.
Fig. 12 is a perspective view of an actuator assembly according to an embodiment of the invention.

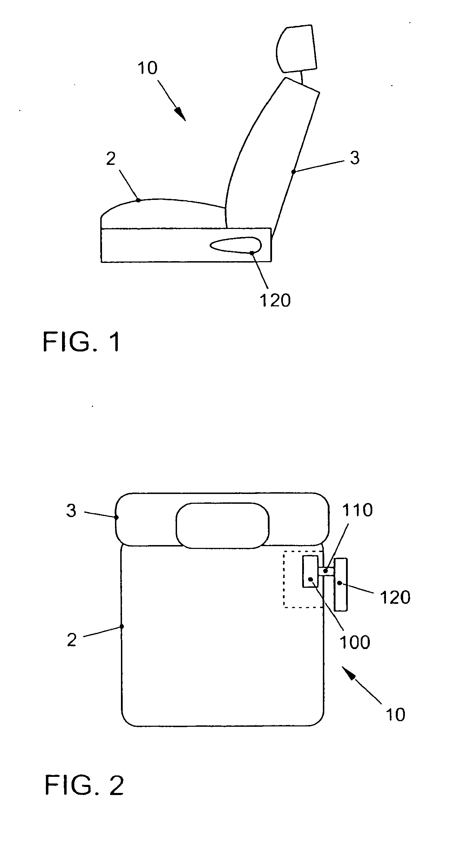

Fig. 1 schematically shows a side view of a vehicle seat 10. The vehicle seat 10 comprises a seat portion 2 and a backrest 3. As further illustrated, the vehicle seat comprises a handle 120 for controlling adjustment functions of the vehicle seat 10, e.g. for adjusting the position or degree of lumbar support in the lower portion of the backrest 3, for adjusting the curvature of the seat portion 2, or the like. It is to be understood that the vehicle seat 10 may actually comprise a plurality of adjustment functions and that a corresponding number of handles or the like may be provided for controlling these adjustment functions.

Fig. 2 shows a schematic top view of the vehicle seat 10 as illustrated in Fig. 1. In particular, Fig. 2 illustrates that the handle 120 is part of an actuator assembly comprising the handle 120 and an actuator 100. The handle 120 is coupled to the actuator 100 via a shaft 110 extending from the actuator 100. As indicated by the dashed line, the actuator 100 is provided within a seat trim, e.g. within upholstery or foam material, and the shaft 110 extends to the outside. It is to be understood that the position of the actuator assembly in Fig. 2 is merely illustrative and that the actuator assembly could be provided at other portions of the vehicle seat 10, as suitable in view of comfortable operation by the user and efficient control of the respective adjustment function. For example, the actuator assembly could be attached to the backrest 3.

During assembly of the vehicle seat 10, the actuator 100 is attached to the vehicle seat, e.g. to a seat frame (not illustrated). Then the seat frame is covered with the seat trim, upholstery, foam material or the like. The handle 120 is attached to the actuator 100 via the shaft 110 at a late stage of the production process.

The actuator 100 may be of any suitable type. For example, the actuator 100 may be coupled to Bowden cable assemblies for transmitting forces to an adjustment mechanism. Further, an adjustment mechanism may also be directly coupled to the actuator.

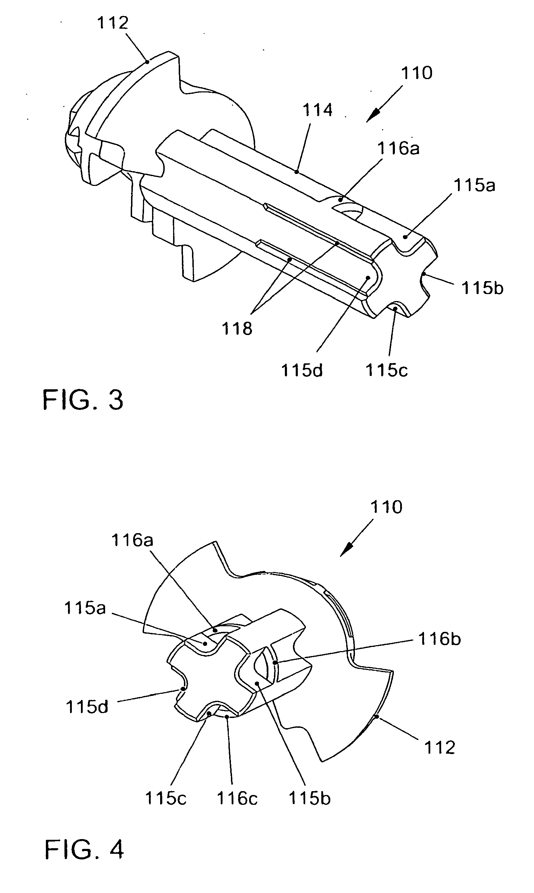

Figs. 3 and 4 show different perspective views of the shaft 110 as used in an actuator assembly according to an embodiment of the invention, e.g. in the actuator assembly of Fig. 2.

The shaft 110 comprises a drive portion 112 for coupling to a force transmission mechanisms or to an adjustment mechanism, which is typically located within the actuator 100, and a coupling portion 114 extending therefrom, so as to be received in a corresponding receiving hole of the handle 120. Accordingly, the coupling portion 114 typically extends to the outside of the actuator 100.

As illustrated, the coupling portion 114 of the shaft 110 is provided with a substantially uniform cross-sectional shape over the axial end portion to be received within the corresponding receiving hole of the handle 120.

The cross-sectional shape of the coupling portion 114 of the shaft 110 has a generally circular outer periphery with four recesses formed therein. The recesses are distributed at equal angular distances and have a rounded V-like shape. As can be seen, the resulting cross-sectional shape may be referred to as a symmetric rounded cross.

Due to the recesses in the cross-sectional shape, a corresponding number of axial channels 115a, 115b, 115c, 115d are formed in the outer surface of the coupling portion 114. In three of the axial channels, in the channels 115a, 115b, and 115c, a radial projection 116a, 116b, and 116c, respectively, is formed at an intermediate axial position of the channels. In the channel 115d, no radial projection is formed. Alternatively, the channel 115d may be provided with a radial projection having a reduced height as compared to the other radial projections 116a, 116b, 116c. The radial projections 116a, 116b, 116c are provided in the form of circumferentially extending ribs which completely fill the channel. That is to say, at the axial position of the radial projections 116a, 116b, 116c, the cross-sectional shape of the coupling portion 114 is substantially circular, apart from the recess corresponding to the axial channel 115d. As will be described in further detail below, the radial projections 116a, 116c have the purpose of being engaged with a corresponding clip in the receiving hole of the handle 120.

As further illustrated, the cross-sectional configuration of the channel 115d is different from the channels 115a, 115b, 115c. In particular, the outer edges of the channel 115d comprise cut-out portions extending substantially over the length of the coupling portion 114 to be received within the receiving hole of the handle 120. By means of the cut-out portions, the width of the V-like channel is increased in the upper section of the V. This difference in the cross-sectional shape of the channel 115d as compared to the other channels 115a, 115b, 115c is used so as to specify a unique mating relation to the handle 120 with respect to the angular orientation when the handle 120 is mounted on the shaft 110.

The shaft 110 may be produced as a single piece by molding a plastic material, thereby allowing for a highly efficient production.

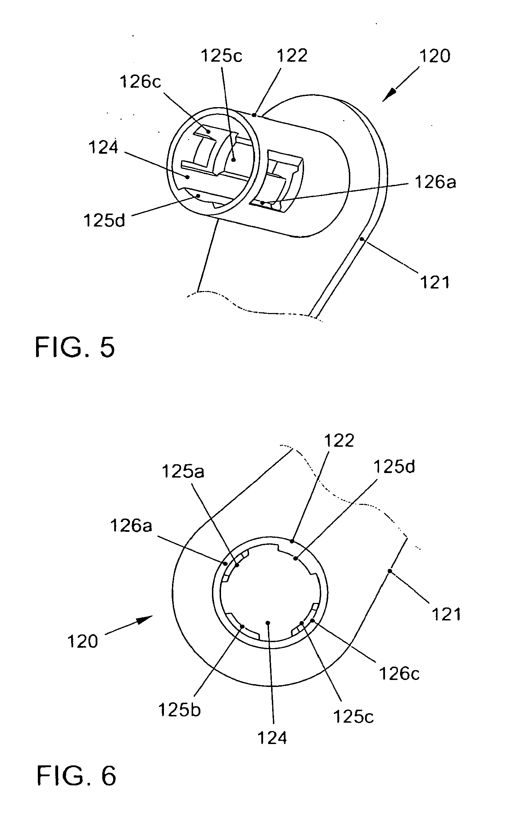

Figs. 5 and 6 show different views of a handle 120 to be used in an actuator assembly according to an embodiment of the invention, e.g. in the actuator assembly of Fig. 2 and in connection with the shaft 110 of Figs. 3 and 4.

As illustrated in Fig. 5, the handle 120 comprises a hand-lever portion 121 and a tubular receiving section 122 with a receiving hole 124 formed therein. The view of Fig. 6 is a front view as viewed directly onto the receiving hole 124.

The receiving hole 124 generally comprises an open end section, through which the end portion of the shaft 110 is to be inserted, and a closed bottom section at the side of the hand-lever portion 121.

The receiving hole 124 has a substantially circular cross-sectional shape which conforms to the cross-sectional shape of the end portion of the shaft 110 to be received therein.

As further illustrated, in the bottom section the cross-sectional shape of the receiving hole 124 comprises four projections formed on the inner periphery, thereby forming four axial ribs 125a, 125b, 125c, 125d on the inner surface of the receiving hole. The axial rib 125d extends up to the end section of the receiving hole 124. The axial ribs 125a and 125c each comprise a clip 126a and 126c at an intermediate position formed toward the end section of the receiving hole 124. The axial rib 125b extends up to an intermediate portion of the receiving hole 124, substantially corresponding to the position of the radial projections 116a, 116b, 116c when the shaft 110 is fully received within the receiving hole 124.

The clips 126a and 126c are provided at an axial position substantially corresponding to the radial projections 116a and 116c on the shaft 110 and are configured to be engaged with the radial projections 116a and 126c when the shaft 110 is fully received within the receiving hole 124, thereby preventing the handle 120 to be pulled-off from the shaft 110.

The axial ribs 125a, 125b, 125c, and 125d are each configured to be fittingly received within the axial channels 115a, 115b, 115c, 115d, respectively, when the shaft 110 is received within the receiving hole 124. That is to say, the side portions of the axial ribs 125, 125b, 125c, 125d are configured to come into contact with the corresponding upper edges of the axial channels 115a, 115b, 115c, 115d, respectively. In the illustrated embodiment, a space remains between the upper portion of the ribs 125a, 125b, 125c, and 125d and the corresponding bottom portion of the channels 115a, 115b, 115c, and 115d, respectively. However, it is also possible to configure the channels and the ribs in such a way that the ribs completely fill the channels when the shaft 110 is inserted into the receiving hole 124. In any case, the mating contact between the ribs 125a, 125b, 125c, 125d and the corresponding channels 115a, 115b, 115c, 115d blocks a rotational movement of the handle 120 with respect to the shaft 110.

As further illustrated, the rib 125d extends over a larger angular width than the other ribs 125a, 125b, 125c. In this way, the rib 125d fits into the widened upper V-like cross-section of the channel 115d, due to the cut-out portions 118, but not into the channels 115a, 115b, 115c. Accordingly, it is ensured that the handle 120 is mounted to the shaft 110 in a unique angular relation, thereby avoiding misassembly. That is to say, assembly of the handle 120 to the shaft 110 in an incorrect angular relation is avoided in accordance with the "poka yoke" principle.

It is to be understood, that the "poka yoke" principle could be implemented in a different manner, e.g. by providing one of the ribs with a larger height and the corresponding channel with a larger depth. Further, a clip could be formed in the axial rib 125b as well, or a clip could be formed only in the axial rib 125a or in the axial rib 125c.

The handle 120 may be produced as a single piece by molding a plastic material, thereby allowing for a highly efficient production.

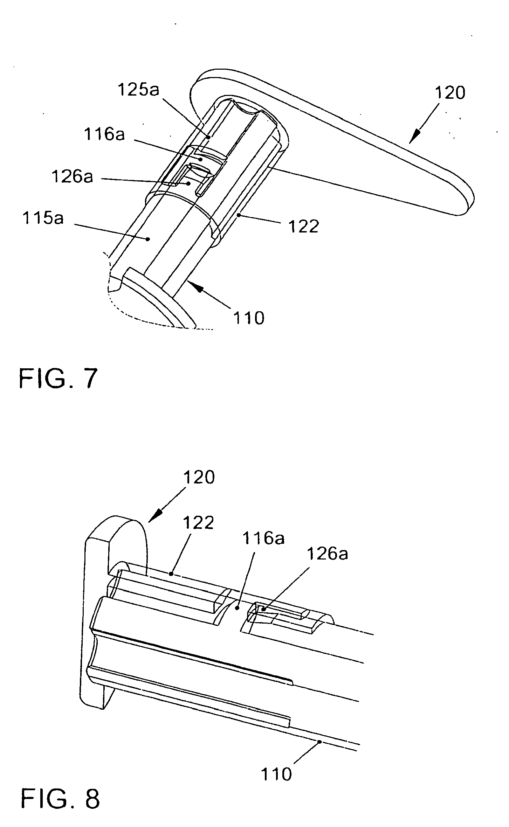

In Figs. 7 and 8, the shaft 110 and the handle 120 are illustrated in an assembled state. In order to visualize the structures within the receiving hole 124, the tubular receiving section 122 is illustrated in a transparent manner. In Fig. 8, half of the tubular receiving section 122 is cut away in order to better visualize the operation of the clip 126a.

As illustrated, the shaft 110 is inserted into the receiving hole within the tubular receiving section 122 until the end portion of the shaft 110 abuts on the closed bottom of the receiving hole. In this state, the radial protrusion 116a is located just beyond the clip 126a, and an end face of the radial protrusion 116a and an end face of the clip 126a are in abutting contact so as to prevent the handle 120 being pulled-off from the shaft 110.

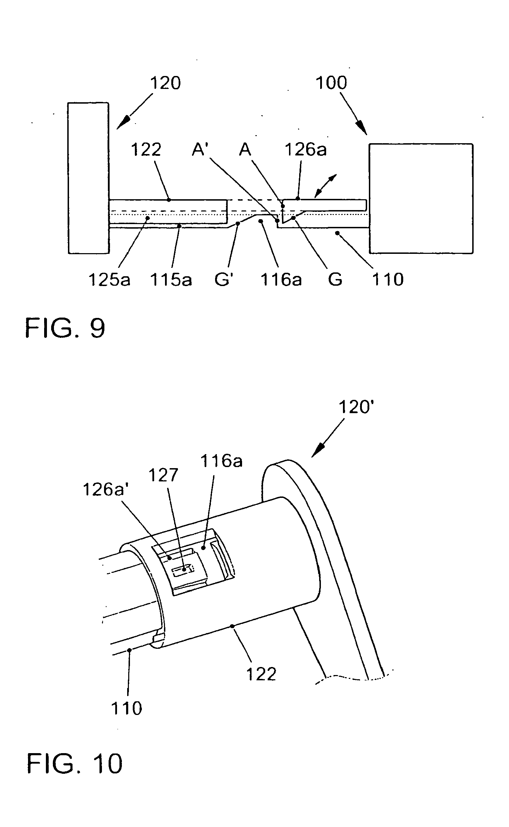

The operating principle of the clip 126a in connection with the radial protrusion 116a is further illustrated in the schematic cross-sectional view of Fig. 9, which is an axial cross-sectional view through the rib 125a. In Fig. 9, the dashed lines illustrate the general tubular shape of the receiving section 122, and the dotted line illustrates the upper edge of the channel 115a. The clip 126a may be lifted in an upward direction of the figure, as indicated by the arrow. The clip 126a is provided with an abutment surface A facing toward the bottom section of the receiving hole and an inclined guide surface G facing toward the open end section of the receiving hole. The radial protrusion 116a on the shaft 110 is provided with an inclined guide surface G' as well, which faces toward the end portion of the shaft 110. Accordingly, when the shaft 110 is inserted into the receiving hole, the guide surface G of the clip 126a comes into contact with the guide surface G' of the radial protrusion 116a, thereby causing the clip 126a to be lifted in the upward direction of the figure when further inserting the shaft 110 into the receiving hole. When the shaft 110 is fully received within the receiving hole, the clip 126a is located beyond the radial protrusion 116a, and the clip 126a returns into its rest position. In this state, the abutting surface A of the clip 126a faces toward an abutting surface A' of the radial protrusion 116a, an abutting contact between the abutting surfaces A, A' preventing the handle 120 to be pulled-off from the shaft 110.

The connection between the handle 120 and the shaft 110 may be released by releasing the clips 126a and 126c. For this purpose, the clips 126a, 126c have to be lifted over the corresponding radial protrusion 116a, 116c. This may be accomplished from the outside of the tubular receiving section 122a by using a suitable tool, e.g. a screw driver.

As illustrated in Fig. 5, an opening is formed within the tubular receiving section 120 around the clips 126a, 126c. Accordingly, the clips 126a, 126c may be engaged with a tool through this opening and lifted over the corresponding radial protrusion 116a, 116c. For facilitating this operation, the openings around the clips 126a, 126c may be provided with an asymmetric shape, as illustrated in Fig. 5.

Fig. 10 shows a perspective partial view of an actuator assembly according to a further embodiment of the invention. The actuator assembly according to this embodiment generally corresponds to that of the above-described embodiment, and similar components have been designated with the same reference signs. In particular, the shaft 110 is configured as in the above-described embodiment. Further, a handle 120' is provided which generally corresponds to the handle 120 of the above-described embodiment. However, as compared to the handle 120, the handle 120' comprises a clip 126a' which has been modified as compared to the clip 126a by providing a hole 127 in the clip 126a' which is accessible from the outside of the tubular receiving section 122. In this way, the clip 126a' may be engaged with a tool through the hole 127.

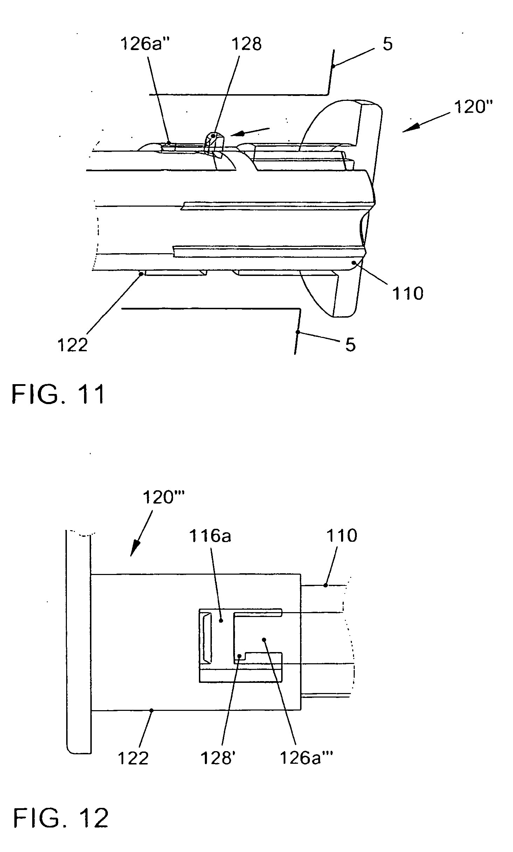

Fig. 11 shows a perspective partial view of an actuator assembly according to a further embodiment of the invention. The actuator assembly generally corresponds to those of the above-described embodiments, and similar components have been designated with the same reference signs. In particular, the actuator assembly comprises a shaft 110 which is similar to the shaft 110 of the above-described embodiments. Further, the actuator assembly comprises a handle 120" which is generally similar to the handles 120, 120' as described above. However, as compared to the handles 120, 120', the handle 120" comprises a clip 126a", which has been modified as compared to the clips 126a, 126a' by providing the clip with an external protrusion 128 which extends outwardly from the tubular receiving section 122. In this case, the clip 126a" may be released by applying a force to the external protrusion 128, as illustrated by the arrow in Fig. 11. This is particularly advantageous when the connection between the shaft 110 and the handle 120" is located at a position which is difficult to access, e.g. within a seat trim or foam material of the seat, as schematically illustrated by the solid lines 5.

Fig. 12 shows a perspective partial view of an actuator assembly according to a further embodiment of the invention. The actuator assembly generally corresponds to those of the above-described embodiments, and similar components have been designated with the same reference signs. In particular, the actuator assembly comprises a shaft 110 which is similar to the shaft 110 of the above-described embodiments. Further, the actuator assembly comprises a handle 120"', which is generally similar to the handles 120, 120', 120" as described above. The handle 120"' comprises a clip 126a"' which is modified as compared to the clips 126a, 126a', and 126a". In particular, the clip 126a"' is provided with a lateral projection 128' which extends within the opening formed in the tubular receiving section 122 around the clip 126a"'. Accordingly the clip 126a"' may be released by engaging the clip 126a"' at the lateral protrusion 128' through the opening in the tubular receiving section 122.

It is to be understood that the above-described measures for facilitating releasing of the clips may be combined with each other. The clips may be released by using a standard tool, such as a screwdriver, or by using a specifically designed tool, e.g. a tool allowing for simultaneously releasing two or more clips.

Further, it is to be understood that various modifications are possible in the above-described embodiments. For example, the cross-sectional shapes of the shaft and of the receiving hole are not limited to being generally circular with four channels or four ribs arranged in a symmetric fashion. A different number of ribs and channels could be provided, e.g. only one rib and channel, or more than four ribs and channels. Further, the ribs and channels could be arranged in an asymmetric fashion, or the generally circular cross-sectional shape could be modified to a generally polygonal shape or the like. Further, although in the above-described embodiments the handle has been illustrated as comprising a hand-lever portion, it is to be understood that the handle could also be provided with other suitable grip portions, such as a hand-wheel or the like.

## Claims

1. An actuator (100) comprising:
a shaft (110) to be received in a receiving hole (124) of a handle (120; 120'; 120"; 120"'), wherein the shaft (110) has a substantially uniform cross-sectional shape over at least the axial end portion to be received in the receiving hole (124),
**characterized in that**
the cross-sectional shape of the shaft (110) comprises a plurality of recesses formed in the outer periphery, thereby forming a plurality of axial channels (115a, 115b, 115c, 115d) in the outer surface of the shaft (110),
a radial projection (116a, 116b, 116c) is formed at an axial position of at least one of the channels (115a, 115b, 115c, 115d), the radial projection (116a, 116b, 116c) being configured to be engaged with a clip in the receiving hole (124) of the handle (120; 120'; 120"; 120"'), and
one of the channels (115a, 115b, 115c, 115d) has a different configuration as compared to the other channels, thereby excluding assembly of the handle (120; 120'; 120"; 120"') to the shaft (110) in a wrong angular orientation.

2. The actuator according to claim 1,
wherein in said one channel (115a, 115b, 115c, 115d), the radial projection (116a, 116b, 116c) is formed with a reduced radial height.

3. The actuator according to claim 1,
wherein said one channel (115a, 115b, 115c, 115d) is formed without the radial projection (116a, 116b, 116c).

4. The actuator according to any one of claims 1-3,
wherein said one channel (115a, 115b, 115c, 115d) is formed with a different cross-sectional configuration as compared to the other channels (115a, 115b, 115c, 115d).

5. The actuator according to any one of the preceding claims,
wherein the cross-sectional shape of the shaft (110), apart from the at least one recess, is substantially circular.

6. The actuator according to any one of the preceding claims,
wherein the radial projection (116a) is formed as a circumferentially extending rib.

7. The actuator according to any one of the preceding claims,
wherein the actuator is configured for actuating adjustment functions of a vehicle seat (10).

8. A handle for connecting to a shaft (110) extending from an actuator (100),
wherein the handle comprises a receiving hole (124) for receiving therein an end portion of the shaft (110),
wherein at least a portion of the receiving hole (124) has a substantially uniform cross-sectional shape comprising a plurality of projections formed on the inner periphery, thereby forming a plurality of axial ribs (125a, 125b, 125c, 125d) on the inner surface of the receiving hole (124), and
wherein a portion of at least one of the ribs (125a, 125b, 125c, 125d) is formed as a clip for engaging a radial projection (116a, 116b, 116c) on the shaft (110),
**characterized in that**
one of the ribs (125a, 125b, 125c, 125d) is formed with a different cross-sectional configuration as compared to the other ribs (125a, 125b, 125c, 125d).

9. The handle according to claim 8,
wherein the cross-sectional shape of the receiving hole (124), apart from the at least one projection, is substantially circular.

10. The handle according to claim 8 or 9,
wherein the receiving hole (124) is formed in a tubular receiving section (122) of the handle.

11. The handle according to claim 10,
wherein an opening in the tubular receiving section (122) is formed around the clip (126a; 126a'; 126a"; 126a"'; 126c).

12. The handle according to claim 11,
wherein the clip (126a"') comprises a lateral projection (128') extending within the opening.

13. The handle according to claim 11 or 12,
wherein the clip (126a') comprises a hole (127) open to the outside of the tubular receiving section (122).

14. The handle according to any one of claims 11 to 13,
wherein an external projection (128) is formed on the clip (126a"), the external projection extending outwardly from the tubular receiving section (122).

15. The handle according to any one of claims 8 to 14,
comprising a hand-lever portion (121) and/or a hand-wheel portion.

16. The handle according to any one of claims 8 to 15,
wherein the handle is configured to be connected to an actuator (100) according to any one of claims 1 to 7.

17. An actuator assembly, comprising:
an actuator (100) according to any one of claims 1 to 7, and
a handle (120; 120'; 120"; 120"') according to any one of claims 8 to 16,
wherein the shaft (110) of the actuator (100) and the receiving hole (124) of the handle (120; 120'; 120"; 120"') are provided with mating cross-sectional shapes.

18. A vehicle seat comprising an actuator assembly according to claim 17.

## Patentansprüche

1. Aktuator (100) umfassend:
eine Welle (110), welche in einem Aufnahmeloch (124) eines Griffs (120; 120'; 120"; 120'") aufzunehmen ist, wobei die Welle (110) eine im Wesentlichen einheitliche Querschnittsform über zumindest dem axialen Endabschnitt, welcher in dem Aufnahmeloch (124) aufzunehmen ist, aufweist,
**dadurch gekennzeichnet,**
**dass** die Querschnittsform der Welle (110) eine Vielzahl von in dem Außenumfang ausgebildeten Aussparungen umfasst, wodurch eine Vielzahl von axialen Kanälen (115a, 115b, 115c, 115d) in der Außenoberfläche der Welle (110) ausgebildet sind,
**dass** ein radialer Vorsprung (116a, 116b, 116c) ist an einer axialen Position von zumindest einem der Kanäle (115a, 115b, 115c, 115d) ausgebildet ist, wobei der radiale Vorsprung (116a, 116b, 116c) ausgestaltet ist, um mit einer Klemme in dem Aufnahmeloch (124) des Griffs (120; 120'; 120"; 120"') gekoppelt zu werden, und
**dass** einer der Kanäle (115a, 115b, 115c, 115d) eine unterschiedliche Ausgestaltung im Vergleich zu den anderen Kanälen aufweist, wodurch eine Anordnung des Griffs (120; 120'; 120"; 120"') zu der Welle in einer falschen winkligen Orientierung ausgeschlossen wird.

2. Aktuator (100) nach Anspruch 1,
wobei in dem einen Kanal (115a, 115b, 115c, 115d) der radiale Vorsprung (116a, 116b, 116c) mit einer reduzierten radialen Höhe ausgebildet ist.

3. Aktuator (100) nach Anspruch 1,
wobei der eine Kanal (115a, 115b, 115c, 115d) ohne den radialen Vorsprung (116a, 116b, 116c) ausgebildet ist.

4. Aktuator nach einem der Ansprüche 1-3,
wobei der eine Kanal (115a, 115b, 115c, 115d) mit einer unterschiedlichen Querschnittskonfiguration im Vergleich zu den anderen Kanälen (115a, 115b, 115c, 115d) ausgebildet ist.

5. Aktuator nach einem der vorhergehenden Ansprüche,
wobei die Querschnittsform der Welle (110), abgesehen von der mindestens einen Aussparung, im Wesentlichen kreisförmig ist.

6. Aktuator nach einem der vorhergehenden Ansprüche,
wobei der radiale Vorsprung (116a) als eine sich in Umfangsrichtung erstreckende Rippe ausgebildet ist.

7. Aktuator nach einem der vorhergehenden Anspruche,
wobei der Aktuator ausgestaltet ist, um Einstellungsfunktionen eines Autositzes (10) zu betätigen.

8. Griff (120; 120'; 120"; 120"') zum Verbinden mit einer Welle (110), welche sich von einem Aktuator (100) erstreckt,
wobei der Griff ein Aufnahmeloch (124) zum darin Aufnehmen eines Endabschnitts der Welle (110) umfasst,
wobei zumindest ein Abschnitt des Aufnahmelochs (124) eine im Wesentlichen einheitliche Querschnittsform, welche eine Vielzahl von auf dem Innenumfang ausgebildete Vorsprünge umfasst, wodurch eine Vielzahl von axialen Rippen (125a, 125b, 125c, 125d) auf der Innenoberfläche des Aufnahmelochs (124) ausgebildet sind, aufweist, und
wobei ein Abschnitt von zumindest einer der Rippen (125a, 125b, 125c, 125d) als Klemme zum Koppeln mit einem radialen Vorsprung (11a, 116b, 116c) auf der Welle (110) ausgebildet ist,
**dadurch gekennzeichnet,**
**dass** eine der Rippen (125a, 125b, 125c, 125d) mit einer unterschiedlichen Querschnittskonfiguration im Vergleich zu den anderen Zargen (125a, 125b, 125c, 125d) ausgebildet ist.

9. Griff (120; 120'; 120"; 120"') nach Anspruch 8,
wobei die Querschnittsform des Aufnahmelochs (124), abgesehen von dem mindestens einen Vorsprung, im Wesentlichen kreisförmig ist.

10. Griff (120; 120'; 120"; 120"') nach Anspruch 8 oder 9;
wobei das Aufnahmeloch (124) in einem röhrenförmigen Aufnahmebereich (122) des Griffs ausgebildet ist.

11. Griff (120; 120'; 120"; 120"') nach Anspruch 10,
wobei eine Öffnung in dem röhrenförmigen Aufnahmebereich (122) um die Klemme (126a; 126a'; 126a"; 126a"', 126c) herum ausgebildet ist.

12. Griff (120; 120'; 120"; 120"') nach Anspruch 11,
wobei die Klemme (126a"') einen lateralen Vorsprung (128'), welcher sich innerhalb der Öffnung erstreckt, umfasst.

13. Griff (120; 120'; 120"; 120"') nach Anspruch 11 oder 12,
wobei die Klemme (126a') ein Loch (127), welches offen zu dem Äußeren des röhrenförmigen Aufnahmebereichs (122) ist, umfasst.

14. Griff (120; 120'; 120"; 120"') nach einem der Ansprüche 11 bis 13,
wobei ein Außenvorsprung (128) auf der Klemme (126a") ausgebildet ist, wobei der Außenvorsprung sich nach Außen von dem röhrenförmigen Aufnahmebereich (122) erstreckt.

15. Griff (120; 120'; 120"; 120"') nach einem der vorhergehenden Ansprüche 8 bis 14, umfassend einen Handhebelabschnitt (121) und/oder einen Handradabschnitt.

16. Griff (120; 120'; 120"; 120"') nach einem der Ansprüche 8 bis 15,
wobei der Griff ausgestaltet ist, um mit einem Aktuator (100) gemäß einem der Ansprüche 1 bis 7 verbunden zu werden.

17. Aktuatoranordnung, umfassend:
einen Aktuator (100) nach einem der Ansprüche 1 bis 7, und
einen Griff (120; 120'; 120"; 120"') nach einem der Ansprüche 8 bis 16,
wobei die Welle (110) des Aktuator (100) und das Aufnahmeloch (124) des Griffs (120; 120'; 120"; 120"') mit zusammenpassende Querschnittsformen versehen sind.

18. Fahrzeugsitz umfassend eine Aktuatoranordnung nach Anspruch 17.

## Revendications

1. Actionneur (100) comprenant :
un arbre (110) destiné à être reçu dans un trou de réception (124) d'une poignée (120 ; 120'; 120" ; 120"'), dans lequel l'arbre (110) a une forme de section transversale sensiblement uniforme sur au moins une partie d'extrémité axiale destinée à être reçue dans le trou de réception (124),
**caractérisé en ce** qui :
la forme transversale de l'arbre (110) comprend une pluralité d'évidements formés dans la périphérie externe, formant ainsi une pluralité de canaux axiaux (115a, 115b, 115c, 115d) dans la surface externe de l'arbre (110),
une saillie radiale (116a, 116b, 116c) est formée au niveau d'une position axiale d'au moins l'un des canaux (115a, 115b, 115c, 115d), la saillie radiale (116a, 116b, 116c) étant configurée pour être mise en prise avec une attache dans le trou de réception (124) de la poignée (120 ; 120' ; 120" ; 120"'), et
l'un des canaux (115a, 115b, 115c, 115d) a une configuration différente par rapport à celle des autres canaux, excluant ainsi l'assemblage de la poignée (120 ; 120' ; 120" ; 120''') à l'arbre (110) dans une mauvaise orientation angulaire.

2. Actionneur selon la revendication 1,
dans lequel dans ledit un canal (115a, 115b, 115c, 115d) , la saillie radiale (116a, 116b, 116c) est formée avec une hauteur radiale réduite.

3. Actionneur selon la revendication 1,
dans lequel ledit un canal (115a, 115b, 115c, 115d) est formé sans la saillie radiale (116a, 116b, 116c).

4. Actionneur selon l'une quelconque des revendications 1 à 3,
dans lequel ledit un canal (115a, 115b, 115c, 115d) est formé avec une configuration transversale différente par rapport à celle des autres canaux (115a, 115b, 115c, 115d).

5. Actionneur selon l'une quelconque des revendications précédentes, dans lequel la forme transversale de l'arbre (110), excepté ledit au moins un évidement, est sensiblement circulaire.

6. Actionneur selon l'une quelconque des revendications précédentes, dans lequel la saillie radiale (116a) est formée comme une nervure s'étendant de manière circonférentielle.

7. Actionneur selon l'une quelconque des revendications précédentes, dans lequel l'actionneur est configuré pour actionner des fonctions d'ajustement d'un siège de véhicule (10).

8. Poignée destinée à se raccorder à un arbre (110) s'étendant à partir d'un actionneur (100), dans lequel la poignée comprend un trou de réception (124) pour recevoir à l'intérieur de ce dernier une partie d'extrémité de l'arbre (110),
dans laquelle au moins une partie de trou de réception (124) a une forme transversale sensiblement uniforme comprenant une pluralité de saillies formées sur la périphérie interne, formant ainsi une pluralité de nervures axiales (125a, 125b, 125c, 125d) sur la surface interne du trou de réception (124), et
dans laquelle une partie d'au moins l'une des nervures (125a, 125b, 125c, 125d) est formée comme une attache pour mettre en prise une saillie radiale (116a, 116b, 116c) sur l'arbre (110),
**caractérisée en ce que** :
l'une des nervures (125a, 125b, 125c, 125d) est formée avec une configuration transversale différente par rapport à celle des autres nervures (125a, 125b, 125c, 125d).

9. Poignée selon la revendication 8, dans laquelle la forme transversale du trou de réception (124), excepté ladite au moins une saillie, est sensiblement circulaire.

10. Poignée selon la revendication 8 ou 9, dans laquelle le trou de réception (124) est formé dans une section de réception tubulaire (122) de la poignée.

11. Poignée selon la revendication 10, dans laquelle une ouverture dans la section de réception tubulaire (122) est formée autour de l'attache (126a ; 126a' ; 126a'' ; 126a''' ; 126c).

12. Poignée selon la revendication 11, dans laquelle l'attache (126a"') comprend une saillie latérale (128') s'étendant à l'intérieur de l'ouverture.

13. Poignée selon la revendication 11 ou 12, dans laquelle l'attache (126a') comprend un trou (127) ouvert à l'extérieur de la section de réception tubulaire (122).

14. Poignée selon l'une quelconque des revendications 11 à 13, dans laquelle une saillie externe (128) est formée sur l'attache (126a"), la saillie externe s'étendant vers l'extérieur à partir de la section de réception tubulaire (122).

15. Poignée selon l'une quelconque des revendications 8 à 14, comprenant une partie de manette (121) et/ou une partie de volant de manoeuvre.

16. Poignée selon l'une quelconque des revendications 8 à 15, dans laquelle la poignée est configurée pour être raccordée à un actionneur (100) selon l'une quelconque des revendications 1 à 7.

17. Ensemble d'actionneur comprenant :
un actionneur (100) selon l'une quelconque des revendications 1 à 7, et
une poignée (120 ; 120' ; 120" ; 120''') selon l'une quelconque des revendications 8 à 16,
dans lequel l'arbre (110) de l'actionneur (100) et le trou de réception (124) de la poignée (120 ; 120' ; 120" ; 120"') sont prévus avec des formes transversales de couplage.

18. Siège de véhicule comprenant un ensemble d'actionneur selon la revendication 17.
